# EUROPEAN PATENT SPECIFICATION

(11) **EP 1 842 757 B1**
(45) Date of publication and mention of the grant of the patent: **26.08.2009**
(21) Application number: 06007047.1
(22) Date of filing: 03.04.2006
(51) Int. Cl.: B60W 20/00, G01C 21/34

(54) **Method for controlling a hybrid vehicle and system thereof**
Verfahren und System zur Kontrolle eines Hybridfahrzeugs
Procédé et système de contrôle d'un véhicule hybride

(43) Date of publication of application: 10.10.2007
(73) Proprietor: Harman Becker Automotive Systems GmbH, 76307 Karlsbad (DE)
(72) Inventor: Schirmer, Hartmut, 25421 Pinneberg (DE)
(74) Representative: Bertsch, Florian Oliver

(56) References cited:
- DE-C1- 19 831 487
- US-A- 5 790 976
- US-A- 5 815 824
- US-A- 5 832 396
- US-A1- 2002 069 000
- US-A1- 2002 188 387

## Description

This invention relates to a method for controlling a hybrid vehicle, the hybrid vehicle having at least two driving mechanisms for driving the vehicle and a system thereof.

### Related Art

The need to reduce fossil fuel consumption in vehicles predominantly powered by internal combustion engines is well-known. Vehicles powered by electric motors attempt to address these needs. Another path to meeting these fuel economy goals is through the use of hybrid vehicles. These hybrid vehicles have two different driving mechanisms. Mostly one driving mechanism uses an internal combustion engine and another driving mechanism uses an electric motor or fuel cells. Additionally, the use of gas motors in vehicles is known.

Recently, the use of hybrid electric vehicles has become a promising tool for the design of vehicles having a reduced fuel consumption. These electric hybrid vehicles have a gasoline-based engine as used in nowadays vehicles, an electric motor, a regenerative breaking system capturing the energy that is normally lost when a break of a vehicle is activated. Additionally, a battery pack is provided, the function of which is to store electrical energy for the electric motor. In these hybrid electric vehicles the driving mechanism is either based on the gasoline engine, the electric motor or on both driving mechanisms.

Additionally, systems are known in which, when the route to a predetermined destination is known the use of the different driving mechanisms is controlled in such a way that the fuel consumption is minimized. By way of example US2002/0188387 A1 discloses an onboard navigation system providing energy management for an electrical vehicle and a hybrid electrical vehicle. When the route to a predetermined destination is known, it can be determined whether parts of the route can be used for recharging the battery pack, such as in downhill passages of the route or in stop and go traffic. The expectations of the driver demand can be determined when the route is known and the use of the different driving mechanisms can be determined depending on the determined route.

US2002/0069000 A1 discloses an apparatus for controlling a hybrid electrical vehicle in which a rechargeable battery is discharged and recharged with regenerative breaking the discharge of the battery and therefore the use of the electric motor is controlled in dependence on the upcoming route.

US 5,815,824 discloses a method according to the preamble of claim 1 of the present invention.

In view of the increasing traffic mainly in urban regions, driving constraints are more and more present for predetermined geographical regions such as a city center. In order to reduce the pollution in these locations, the authorities begin to ban vehicles using a fuel combustion engine from certain geographical regions. Often, these driving mechanism constraints depend on time, e.g. on days of heavy smog. The respective authorities may restrict the use of fuel combustion engine vehicles in a certain part of a geographical region. Often, hybrid vehicles use one fuel combustion engine using gasoline or a diesel as fuel, the other driving mechanism being a so-called zero emission driving mechanism such as an electric motor. Normally, these zero emission driving mechanisms can still be used in cases where fuel combustion engines using gasoline are not allowed any more. In most cases, the driving mechanism constraints only exist for predetermined geographical regions, whereas in other regions this constraint is not present.

Additionally, the driver of a hybrid vehicle may wish to use a certain driving mechanism in a predetermined geographical region. By way of example, when driving in the hometown city, the driver may wish to use a certain driving mechanism such as an electric motor instead of the fuel combustion engine.

For the above-mentioned situations a need exists to provide a possibility to control a hybrid vehicle in such a way that the possible mechanism constraints or preferences are taken into consideration for determining the actual driving mechanism of a vehicle.

### Summary of the Invention

This need is met by the features of the independent claims. In the dependent claims preferred embodiments of the invention are described.

According to a first aspect of the invention, a method is provided for controlling a hybrid vehicle, the hybrid vehicle having at least two different driving mechanisms for driving the vehicle. According to this first aspect, the present position of the vehicle is determined. In addition to the position, the driving mechanism constraints or preferences are determined, which may exist for predetermined geographical regions. In view of the position of the vehicle and in view of the driving mechanism constraints, it is then verified whether any driving mechanism preferences or constraints exist for the present vehicle position. If this is the case, the actual driving mechanism status of the vehicle is determined and it is verified whether the actual driving mechanism status is in accordance with the determined constraints or preferences. Many of nowadays vehicles are equipped with a navigation system guiding the user to a predetermined destination location. These navigation systems normally detect the present position of the vehicle. This knowledge of the vehicle position can be used for verifying whether there exist driving mechanism preferences or constraints for the present vehicle position and it can be verified whether the constraints or preferences are met by the vehicle.

It may happen that a constraint is detected for the present vehicle position. The driving mechanism status of the vehicle can then be determined in order to see whether it is in agreement with the driving mechanism constraint. If the actual driving mechanism status is not in accordance with the driving mechanism constraint, the resource status of the driving mechanism for which no constraint exists can be determined. In this situation it can happen that the resource status of the driving mechanism for which no constraint exists does not allow the crossing of the restricted area with a driving mechanism status meeting the constraint. In this case a route out of the geographical region having the driving mechanism constraint is calculated. This route can be the shortest route out of the restricted area if the resource status is very low. In other cases the route may be calculated taking into account the destination location and/or taking into account the resource status of the driving mechanism for which no constraint exists.

Preferably, the driver of the vehicle is informed when the actual driving mechanism status is not in agreement with the determined constraints or preferences. The driver may be informed visually or orally that the vehicle is at the moment using a driving mechanism which does not meet the constraints or preferences. The user may then react accordingly. In the case of a preference, the user may switch the driving mechanism to the driving mechanism meeting the preference. In the case of a driving mechanism constraint the driver may also switch the driving mechanisms if possible, and if not, the driver may decide to use another route. In the case a driving mechanism constraint exists, the driver may also be informed of the geographical region for which the constraint exists. The driver can then decide which route to take to a destination in order to avoid the region for which the constraint exists.

Furthermore, the driving mechanisms of the vehicle can also be controlled in such a way that the driving mechanism status automatically meets the preferences or constraints. This automatic control of the driving mechanism status can be done in addition to the information of the driver or instead.

According to a preferred embodiment of the invention, the route to a predetermined destination is also determined and it is verified whether the determined route passes through a geographical region in which driving mechanism constraints or preferences exist. When a route to a predetermined destination was determined and when driving mechanism preferences or constraints are present, the driving mechanisms for the different parts of the route may be determined in such a way that the driving mechanism constraints or preferences are met. However, it is not always sure whether driving mechanism constraints or preferences can be followed or not. By way of example, if one driving mechanism is an electric motor, the charge status of the battery must be in such a way that the vehicle can be driven only using the electric motor for the part of the route for which the driving constraint a preference exists. In order to determine whether the driving mechanism for which no constraint exists can be used, the resource status of the driving mechanism can be determined first. In view of the determined resource status, the different driving mechanisms and the switching locations for the driving mechanisms can then be determined in such a way that the driving mechanism constraints or preferences are met in view of the present resource status. Once the resource status and the destination location are known, it can be determined in advance which driving mechanism is used for the different parts of the route. Additionally, a minimum resource level for at least one of the driving mechanism may be determined and the use of the different driving mechanisms and the switching locations for the route can be determined in such a way that the resource level for this driving mechanism does not fall under the minimum resource level. When the route to the destination is known and when the resource level of at least one driving mechanism is known, the resource status for said driving mechanism can be predicted for the different parts of the route. When the vehicle continues traveling, it can then be verified whether, depending on the position, the resource status differs from the predicted resource status by a predetermined amount. According to one embodiment of the invention, the resource status is determined for the driving mechanism which is not the fuel combustion engine. Normally, gasoline stations in which a fuel refilling can be carried out are widely spread. However, for other driving mechanisms such as an electric motor or a hydrogen-driven motor, the locations at which the resource status can be refilled are much less common.

When the vehicle continues traveling, it can be verified whether the predicted resource status corresponds to the actual resource status. If this is not the case, the use of the different driving mechanisms and the switching locations for switching from one driving mechanism to the other, or for switching from one driving mechanism to two driving mechanisms or from two driving mechanisms to one driving mechanism can be recalculated for the remaining part of the route taking into account the driving mechanism constraints or preferences

According to a preferred embodiment of the invention, the driving mechanism constraints or preferences are stored in a database. For determining whether driving mechanism preferences or constraints exist, said database may be accessed and it is verified whether for the present vehicle position or whether for the route to a predetermined destination a driving mechanism preference or constraint exists. In the case of a driving mechanism preference the user may have input this preference himself. Driving mechanism constraints may also be fixedly provided in the database. However, the driving mechanism constraints can also be time-dependent. Accordingly, the driving mechanism constraints may also be received from outside the vehicle, e.g. via a receiving unit receiving the constraints from a wireless transmission system. One possibility of receiving such driving mechanism constraints may be the incorporation of the constraint information in a radio program signal. The information can be transmitted by way of example together with the information provided in the traffic message channel (TMC). The constraint information may also be received using a mobile communication unit such as a cellular phone provided in the vehicle (e.g. included in an SMS).

Additionally, according to another embodiment of the invention, it can be determined whether, in view of the determined resource status, a route to the destination location can be calculated at all, meeting the driving mechanism preferences or constraints. If such a route meeting the driving mechanism or preferences cannot be calculated, the user may be informed. The user may then have to select another route which is not going through the region having the driving mechanism constraint. If the information of a driving mechanism constraint is received for a part of the route in front of the vehicle, the use of the driving mechanisms before entering the restricted are can be controlled in such a way that the driving mechanism constraint will be met. In case of a fuel combustion engine and of an electric motor, the fuel combustion engine can be used to charge the battery. Additionally, the regenerative breaking energy of the vehicle can also be used to recharge the battery of the vehicle. The driving mechanism can then be controlled in the part of the route before entering the area having the constraint in such a way that the resource status of the driving mechanism for which no driving mechanism constraint exists is in a state where the vehicle can be guided through the area where the constraint applies only with the use of the driving mechanism for which no constraint exists.

The invention further relates to a system for controlling a hybrid vehicle, the system comprising a position determination unit determining the present position of the vehicle. Additionally, a unit for determining existing driving mechanism constraints or preferences for geographical regions is provided. When the position and the driving mechanism constraints or preferences are known, a driving mechanism determination unit can determine the actual driving mechanism status of the vehicle and the control unit can verify whether any driving mechanism preferences or constraints exist for the present vehicle position. If this is the case, it can additionally be verified whether the actual driving mechanism status is in accordance with the determined preferences or constraints and the control unit can furthermore control the driving mechanisms of the vehicle in such a way that the driving mechanism status meets the preferences or constraints. Additionally, a route determination unit and a driving mechanism predicting unit may be provided, the first for determining a route to a predetermined destination, the latter for predicting the use of the different driving mechanisms for the determined route. The driving mechanism predicting unit may also determine the switching location, at which the vehicle switches from one driving mechanism to the other.

Additionally, the system may comprise a database in which the driving mechanism constraints or preferences are stored. The unit for determining the driving mechanism constraints accesses this database and verifies whether any driving mechanism preferences or constraints or whether any new constraints are present in the database. Additionally, a resource determination unit may be provided, determining the resource status of at least one of the driving mechanisms. When the resource status of a driving mechanism is known, it can be determined whether this driving mechanism can be used for a part of the route or not. Preferably, the control unit controls the driving mechanism predicting unit in such a way that the actual driving mechanism is in accordance with the driving mechanism constraints. Additionally, the determined resource status has to be taken into account. The hybrid vehicle may be a vehicle having at least one of the following driving mechanisms, a fuel combustion engine, an electric motor and a hydrogen-driven motor. Preferably, the system having the different driving mechanisms works as described above.

Other advantages of the invention will become apparent to those skilled in the art upon reading and understanding the following detailed description with reference to the accompanying figures.

### Brief Description of the Drawings

Figure 1 is a block diagram showing a schematic configuration of a system for controlling a hybrid vehicle;
Figure 2 is a flow chart showing the steps for controlling the hybrid vehicle;
Figure 3 shows a part of a road map for explaining different aspects of the invention, and
Figure 4 shows another flow chart with the steps for controlling a vehicle, taking into account the actual vehicle position.

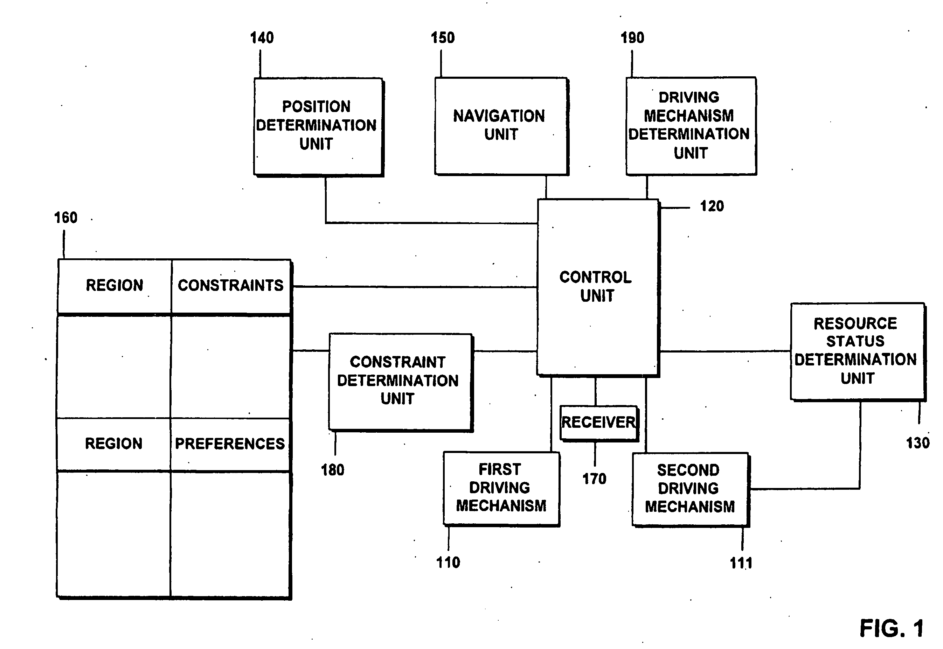

In Figure 1 a system is shown which can be used for effectively controlling a hybrid vehicle. The hybrid vehicle comprises a first driving mechanism 110 and a second driving mechanism 111. By way of example, the first driving mechanism may be a fuel combustion engine, the other driving mechanism can be an electric motor. It should be understood that other driving mechanisms such as hydrogen-based driving mechanisms can be used. A main control unit 120 is provided which controls the use of the different driving mechanism. The control unit 120 can control the vehicle in such a way that for driving the vehicle either the first driving mechanism or the second driving mechanism or both driving mechanisms are used. In order to determine which driving mechanism can be used, a resource status determination unit 130 is provided. When the second driving mechanism is an electric motor, the vehicle further comprises a battery (not shown) for storing the electric energy for the electric motor. The battery can be recharged during driving, e.g. when the break of the vehicle is activated or the battery can also be recharged by the fuel combustion engine. The resource status determination unit can determine the charge status of the battery. The resource status is fed to the control unit 120 and the control unit can then determine which driving mechanism is used. Furthermore, a position detecting unit 140 is provided which detects the actual position of the vehicle. For this position detection satellite data such as GPS data may be used. However, also dead recogning systems taking into account other sensor signals of the vehicle can be used. In addition to the position determination unit 140 a navigation unit 150 is provided, the navigation unit calculating a route to a predetermined destination location normally based on digital map data not shown in the figure.

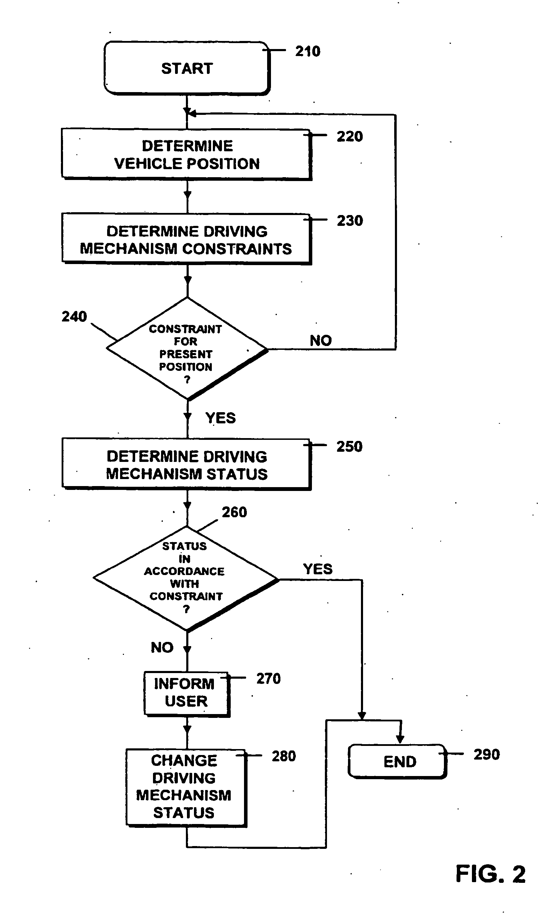

The system shown in Figure 1 furthermore comprises a data base 160 in which the driving mechanism constraints or preferences are stored together with the geographical region in which the constraint or preference applies. There may exist geographical regions for which a permanent driving mechanism constraint exists. Furthermore, the driver may have input driving mechanism preferences into the database. Often, the driving mechanism constraints are time-dependent. In order to have constraint information which is valid for the day of driving, a receiver 170 may be provided which receives driving mechanism constraints. The constraint information may be received included in a short message service (SMS) received by cellular phone provided in the vehicle. Furthermore, the constraint information may be received using other wireless transmission systems. A constraint determination unit 180 determines the valid preferences or constraints by accessing the database 160. A driving mechanism determination unit 190 determines the actual driving mechanism status of the vehicle. The driving mechanism status is transmitted to the control unit where it is compared to the possible driving mechanism constraints or preferences. The system can then control the vehicle in such a way that the driving mechanism preferences or constraints are met as will be discussed in more detail in connection with Figures 2-4.

In connection with Figure 2 it is shown how the system of Figure 1 can control a hybrid vehicle. After the start of the process in step 210, the vehicle position is determined in step 220. In addition to the vehicle position determined by the position determination unit 140, the driving mechanism constraints are determined by the constraint determination unit 180 (step 230). When the vehicle position is known and when the driving mechanism constraints are known, it can be asked in step 230 whether constraint information is present which is valid for the present position of the vehicle. If no constraints are present for the vehicle position, the system can return to step 220 supervising the vehicle position and the driving mechanism constraints. If, however, constraints are provided in the database 160, which apply to the present vehicle position, the system can determine the driving mechanism status of the vehicle in step 250. In step 260 the vehicle driving mechanism status can then be compared to the driving mechanism constraints in step 260. If the driving mechanism is not in accordance with the determined constraints, the user may be informed in step 270 that the present driving mechanism status does not meet the constraints. In the next step 280 the control unit 120 can then control the driving mechanism in such a way that the driving mechanism is used for which no constraint exists and that the driving mechanism for which the constraint exists is not used. The process ends in step 290. When it is determined in step 260 that the vehicle driving mechanism status is in accordance with the constraints, no further steps have to be carried out and the system directly turns to the end in step 290. It should be understood that the steps shown in Figure 2 can also be used when a driving mechanism preference is present instead of a constraint.

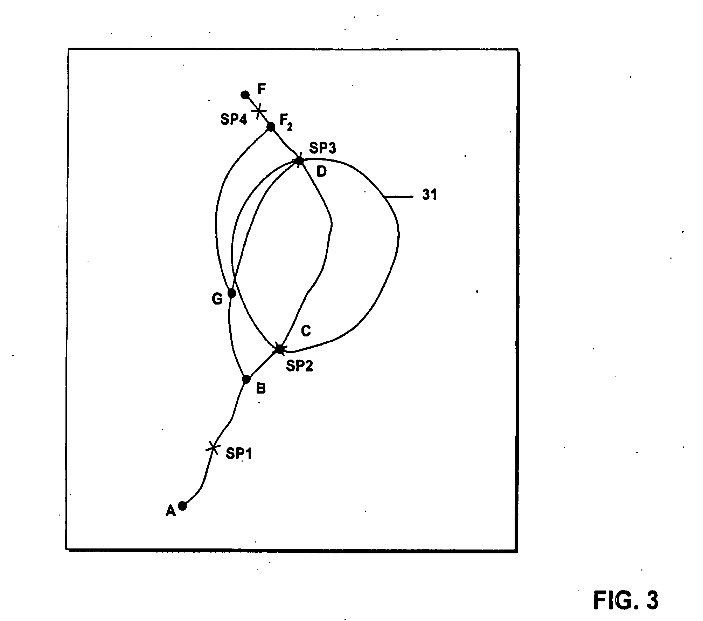

In Figure 3 the invention is explained in more detail in connection with an extract of a map showing the route from a starting location A to a destination location F. The fastest route from location A to location F may be the route traveling along the data points ABCDEF. Now it may happen that there exists a driving mechanism constraint for a part of the route, the driving mechanism constraint being shown by the encircled area 31. By way of example, this part of the map 31 may be an urban agglomeration for which a smog alarm has been activated and for which the use of fuel combustion engine is completely prohibited.

In a first case the vehicle may receive the driving vehicle constraint when it is on the way from A to F. If the vehicle is driving between the data points C and D when the driving mechanism constraint is received, the control unit can control the driving mechanism in such a way that within the encircled area 31, the driving mechanism is used for which no constraint is present.

In a second case the control system for controlling the driving mechanism is aware of the constraint before entering area 31. By way of example, when starting at location A, the system may already know that the driving mechanism constraint is present within area 31. If it is known that for calculating the route from A to F this driving mechanism constraint exists between C and D, the control unit 120 can control the driving mechanisms in such a way that the driving mechanism for which no constraint exists, can be used for crossing the area from location C to location D.

In order to determine whether the driving mechanism for which no constraint exists can be used between C and D, the resource status for said driving mechanism can be determined first. The system can then be controlled in such a way that the resource level is such at location C that the driving mechanism can be used for driving from C to D. If, however, it is determined that in view of the present resource level it is not possible to drive from location C to location D only using the driving mechanism for which no constraint exists, the system may determine the route in such a way that the vehicle travels along location A, B, G, D, E, F or A, B, G, E, F. The latter route is selected when it is determined that the resource status does not allow the use of the driving mechanism, for which no constraint exists, at all.

It should be understood that the above-mentioned examples can also be used when not a driving mechanism constraints is present in area 31, but a driving mechanism preference the user may have selected in advance. When one driving mechanism is a fuel combustion engine and the other driving mechanism is an electric motor, the battery has to be charged in such a way that it is possible to use the electric motor between location C and D. When the system knows in advance that the driving mechanism constraint or preference in area 31 exists, the fuel combustion engine may be used between locations A and C, the electric motor being used between location C and D.

In addition to the route itself the control unit furthermore predicts which driving mechanism is used for which part of the route. By way of example, when planning the route, the switching points are determined together with the route determination. By way of example, when traveling from location A to destination location F, the vehicle may be controlled in such a way that, starting from location A to switching point SP1, the vehicle is driven by the electric motor. At location SP1 the driving mechanism is changed to the fuel combustion engine between locations SP1 and SP2. The control unit knows that between SP2 and SP3 the electric motor has to be used. Accordingly, before entering area 31, the vehicle is driven using the fuel combustion engine, so that the battery may be charged either by regenerative breaking or by the fuel combustion engine itself. Between switching points SP2 and SP3 the vehicle uses the electric motor. At location SP3 the driving mechanism is again switched to the fuel combustion engine. At switching point SP4 the driving mechanism may be again switched to the electric motor, as the system knows that the destination location will be reached at location F.

It may also happen that the system receives the driving mechanism constraint somewhere between locations A and C. The system can then determine the resource status of the driving mechanism which can be used within area 31. If possible, the driving mechanisms are then controlled in such a way that the fastest route going through locations B, C, D, E and F is used.

Furthermore, the situation may occur that a driving mechanism is detected for area 31 when the vehicle is within area 31, by way of example in the neighborhood of location C. When the driving mechanism constraint is detected and when the resource status of the vehicle is detected for the driving mechanism for which no constraint exists, it has to be decided whether the vehicle can continue driving to location D or whether it might be necessary to return to location B in order to get out of the restricted area as quickly as possible. This may be necessary when the resource status does not allow the crossing of area 31 based on the driving mechanism for which no constraint exists.

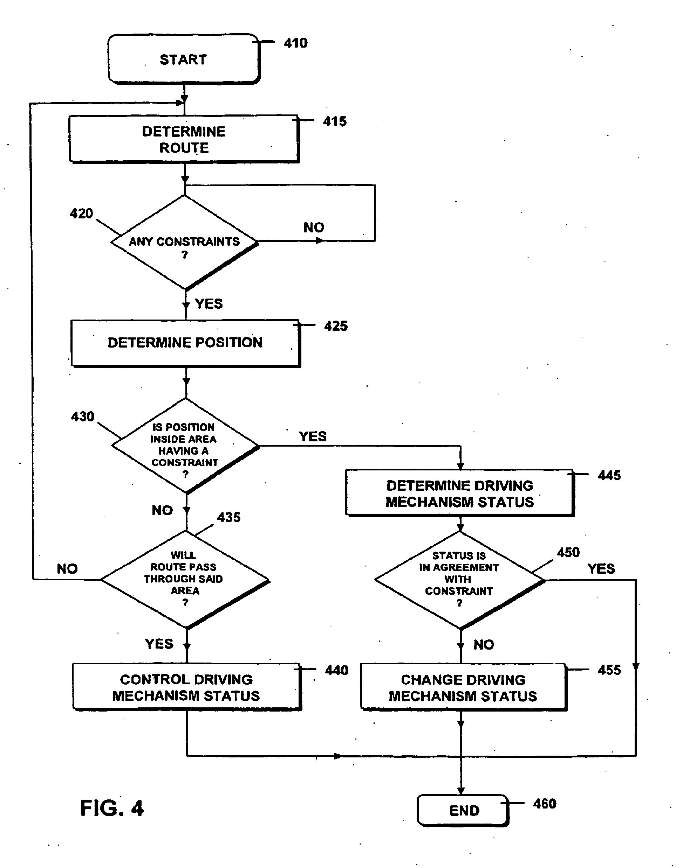

In Figure 4 a flow chart is shown, showing in more detail the different steps that are carried out for controlling a hybrid vehicle when the present position is known.

The process starts in step 410. First of all, the route from a starting location to a predetermined destination is calculated in step 415. During driving it is then asked whether any driving mechanism constraints are present. To this end, the control system may access data base 160, in which the driving mechanism constraints and preferences are stored. If no constraint can be found, the vehicle continues driving and continues asking whether a constraint exists or is received from outside the vehicle. If, however, a constraint was found in step 420, the position of the vehicle is determined in step 425. Now when the position and the driving mechanism constraint and the corresponding geographical region is known, the system can ask in step 430 whether the present vehicle position is inside the geographical region in which the constraint exists. If this is not the case, then the system may ask in the next step 435 whether the route will pass through an area having the constraint. If the determined route will not pass through the area having the constraint, the flow charge returns to step 420, asking whether a constraint exists at all. If it is determined in step 435 that the route will pass through the area in which a constraint exists, the system may control the driving mechanisms in such a way that the driving mechanism constraints are met as was discussed in connection with Figure 3 (step 440). If it is possible to control the driving mechanisms in accordance with the constraint, the controlling will be carried out, and the user may be informed that the vehicle can drive through the restricted area. If a controlling of the driving mechanisms is not possible in such a way that the constraint within the area can be met, the user can also be informed of the fact that the restricted area cannot be passed with the driving mechanism meeting the constraint. The driver may then react and select another route, or the system may automatically determine another route which is not going through the restricted area.

If it is determined in step 430 that the present vehicle position is inside the area where the constraint applies, the driving mechanism status will be determined in step 445. In step 450 it is then asked whether the present driving mechanism status coincides with the constraint. If this is the case, the vehicle can continue driving. If the driving mechanism status does not correspond to the constraint, the system may change the driving mechanism of the vehicle in step 445. The process ends in step 460. It should be understood that the driver may be informed of all the driving mechanism changes.

Summarizing, this invention provides a possibility to adapt the driving mechanisms of a hybrid vehicle to the actual vehicle position, so that driving mechanism constraints or preferences can be easily met.

## Claims

1. Method for controlling a hybrid vehicle, the hybrid vehicle having at least two different mechanisms (110, 111) for driving the vehicle, the method comprising the following steps:
- determining the present position (220; 425) of the vehicle,
- determining driving mechanism constraints or preferences (230) for certain geographical regions,
- verifying whether driving mechanism preferences or constraints exist for the present vehicle position, and, in the affirmative,
- determining the actual driving mechanism status (250; 445) of the vehicle, and
- verifying (260) whether the actual driving mechanism status is in accordance with the determined constraints or preferences,
**characterized in that** the method further comprises the step of calculating a route out of the geographical region having a driving mechanism constraint, the route being calculated taking into account the destination location and/or the actual resource status of the driving mechanism for which no constraint exists.

2. Method according to claim 1, wherein the driver of the vehicle is informed (270) when the actual driving mechanism status is not in agreement with the constraints or preferences.

3. Method according to claim 1 or 2, **characterized by** further comprising the step of controlling (280; 440, 455) the driving mechanisms of the vehicle in such a way that the driving mechanism status of the vehicle meets the preferences or constraints.

4. Method according to any of the preceding claims, further comprising the steps of determining a route to a predetermined destination (415) and verifying (435) whether the determined route is passing through a geographical region in which driving mechanisms constraints or preferences apply.

5. Method according to any of the preceding claims wherein for determining driving mechanism constraints or preferences (230) a data base (160) is accessed in which driving mechanism constraints or preferences are stored together with the geographical region for which the constraint or preferences are valid.

6. Method according to any of the preceding claims, wherein the driving mechanisms constraints or preferences are received via a receiving unit (170) receiving the constraints or preferences via a wireless transmission system.

7. Method according to any of claims 4 to 6, **characterized in that** the driving mechanisms for the different parts of the route are determined in such a way, that the driving mechanism constraints or preferences are met.

8. Method according to any of claims 4 to 7, **characterized by** further comprising the steps of
- determining the resource status of at least one driving mechanisms, and
- determining the use of the different driving mechanisms and the switching locations of the driving mechanisms in accordance with the resource status in such a way, that the driving mechanism constraints or preferences are met.

9. Method according to claim 8, **characterized by** further comprising the step of determining a minimum resource level for at least one of the different driving mechanisms, wherein the use of the different driving mechanisms and the switching locations for the determined route is determined in such a way, that the resource level for said at least one driving mechanism does not fall under the minimum resource level.

10. Method according to any of the preceding claims, **characterized by** further comprising the step of predicting the resource status for the different parts of the route, wherein during driving it is verified, whether, depending on the position, the resource status differs from the predicted resource status by a predetermined amount.

11. Method according to claim 10, **characterized in that** the use of the different driving mechanisms and the switching locations are recalculated for the remaining route if the resource status differs from the predicted resource status by a predetermined amount.

12. Method according to any of claims 8 to 11, **characterized by** further comprising the step of determining if, in view of the resource status, a route can be calculated meeting the driving mechanism constraints or preferences.

13. Method according to any of claims 8 to 12, wherein the resource status is determined for the driving mechanism for which no driving mechanism constraints or preferences exist for the determined route.

14. Method according to any of claims 8 to 13, wherein the resource status is determined at least for a driving mechanism which is not combusting fossil fuels.

15. System for controlling a hybrid vehicle, the hybrid vehicle having at least two different mechanisms (110, 111) for driving the vehicle, the system comprising:
- a position determination unit (140) determining the present position of the vehicle,
- a unit (180) for determining existing driving mechanism constraints or preferences for geographical regions,
- a driving mechanism determination unit (190) determining the actual driving mechanism status of the vehicle, and
- a control unit (120) verifying whether driving mechanism preferences or constraints exist for the present vehicle position, and, in the affirmative, verifying whether the actual driving mechanism status is in accordance with the determined preferences or constraints, **characterized in that** the system is adapted to perform the method according to any of claims 1-14.

16. System according to claim 15, **characterized by** further comprising a route determination unit (150) determining a route to a predetermined destination.

17. System according to claim 16, **characterized by** further comprising a driving mechanism predicting unit predicting the use of the different driving mechanisms for the determined route and the switching locations for changing the driving mechanisms.

18. System according to claim 17, wherein the control unit (120) controls the driving mechanism predicting unit in such a way, that the driving mechanism status will meet the driving mechanism constraints or preferences of the route.

19. System according to any of claims 15 to 18, **characterized by** further comprising a data base (160) in which the driving mechanisms constraints or preferences are stored.

20. System according to any of claims 15 to 19, **characterized by** further comprising a resource determination unit (130) for determining the resource status of at least one of said at least two different driving mechanisms (110, 111).

21. System according to claim 20, **characterized in that** the control unit (120) controls the driving mechanism predicting unit in such a way, that the driving mechanism status will meet the driving mechanism constraints or preferences of the route taking into account the determined resource status.

22. System according to any of claims 15 to 21, **characterized in that** the hybrid vehicle has at least one of the following driving mechanisms: a fuel combustion motor, an electric motor, and a hydrogen driven motor.

## Patentansprüche

1. Verfahren zum Steuern eines Hybridfahrzeugs, wobei das Hybridfahrzeug mindestens zwei unterschiedliche Mechanismen (110, 111) zum Antreiben des Fahrzeugs umfasst, wobei das Verfahren die folgenden Schritte umfasst:
- Bestimmen der gegenwärtigen Position (220; 425) des Fahrzeugs,
- Bestimmen von Antriebsmechanismusbeschränkungen oder Antriebsmechanismuspräferenzen (230) für bestimmte geographische Regionen,
- Überprüfen, ob Antriebsmechanismuspräferenzen oder Antriebsmechanismusbeschränkungen für die gegenwärtige Fahrzeugposition bestehen, und, falls dies zutrifft,
- Bestimmen des derzeitigen Antriebsmechanismusstatus (250; 445) des Fahrzeugs, und
- Überprüfen (260), ob der derzeitige Antriebsmechanismusstatus mit den bestimmten Beschränkungen oder Präferenzen übereinstimmt,
- **dadurch gekennzeichnet, dass** das Verfahren ferner den Schritt eines Berechnens einer Route aus der geographischen Region mit einer Antriebsmechanismusbeschränkung heraus umfasst, wobei die Route unter Berücksichtigung des Zielortes und/oder des derzeitigen Betriebsmittelstatus des Antriebsmechanismus, für welchen keine Beschränkung besteht, berechnet wird.

2. Verfahren nach Anspruch 1, wobei der Fahrer des Fahrzeugs informiert wird (270), wenn der derzeitige Antriebsmechanismusstatus nicht in Übereinstimmung mit den Beschränkungen oder Präferenzen ist.

3. Verfahren nach Anspruch 1 oder 2, **dadurch gekennzeichnet, dass** das Verfahren ferner den Schritt eines Steuerns (280; 440, 455) des Antriebsmechanismus des Fahrzeugs in einer derartigen Art und Weise umfasst, dass der Antriebsmechanismusstatus des Fahrzeugs die Präferenzen oder Beschränkungen erfüllt.

4. Verfahren nach einem der vorhergehenden Ansprüche, ferner umfassend den Schritt eines Bestimmens einer Route zu einem vorbestimmten Ziel (415) und ein Überprüfen (435), ob die bestimmte Route durch eine geographische Region verläuft, in welcher Antriebsmechanismusbeschränkungen oder Antriebsmechanismuspräferenzen gelten.

5. Verfahren nach einem der vorhergehenden Ansprüche, wobei zum Bestimmen Antriebsmechanismusbeschränkungen oder Präferenzen (230) auf eine Datenbasis (160) zugegriffen wird, in welcher Antriebsmechanismusbeschränkungen oder Präferenzen zusammen mit der geographischen Region, für welche die Beschränkungen oder Präferenzen gültig sind, gespeichert sind.

6. Verfahren nach einem der vorhergehenden Ansprüche, wobei die Antriebsmechanismusbeschränkungen oder Präferenzen über eine Empfangseinheit (170) empfangen werden, welche die Beschränkungen oder Präferenzen über ein drahtloses Übertragungssystem empfängt.

7. Verfahren nach einem der Ansprüche 4 bis 6, **dadurch gekennzeichnet, dass** die Antriebsmechanismen für die unterschiedlichen Teile der Route in einer derartigen Art und Weise bestimmt werden, dass die Antriebsmechanismusbeschränkungen oder Antriebsmechanismuspräferenzen erfüllt werden.

8. Verfahren nach einem der Ansprüche 4 bis 7, **dadurch gekennzeichnet, dass** das Verfahren ferner die Schritte umfasst:
- Bestimmen des Betriebsmittelstatus von mindestens einem Antriebsmechanismus, und
- Bestimmen der Verwendung der unterschiedlichen Antriebsmechanismen und der Schaltorte für die Antriebsmechanismen gemäß dem Betriebsmittelstatus in einer derartigen Art und Weise, dass die Antriebsmechanismusbeschränkungen oder Antriebsmechanismuspräferenzen erfüllt werden.

9. Verfahren nach Anspruch 8, **dadurch gekennzeichnet, dass** das Verfahren ferner den Schritt eines Bestimmens eines minimalen Betriebsmittelpegels für mindestens einen der unterschiedlichen Antriebsmechanismen umfasst, wobei die Verwendung der unterschiedlichen Antriebsmechanismen und der Schaltorte für die bestimmte Route in einer derartigen Art und Weise bestimmt werden, dass der Betriebsmittelpegel für den mindestens einen Antriebsmechanismus nicht unter den minimalen Betriebsmittelpegel fällt.

10. Verfahren nach einem der vorhergehenden Ansprüche, **dadurch gekennzeichnet, dass** das Verfahren ferner den Schritt eines Vorhersagens des Betriebsmittelstatus für die unterschiedlichen Teile der Route umfasst, wobei während einer Fahrt überprüft wird, ob in Abhängigkeit der Position der Betriebsmittelstatus von dem vorhergesagten Betriebsmittelstatus um einen vorbestimmten Betrag abweicht.

11. Verfahren nach Anspruch 10, **dadurch gekennzeichnet, dass** die Verwendung der unterschiedlichen Antriebsmechanismen und die Schaltorte für die übrige Route neu berechnet werden, wenn der Betriebsmittelstatus von dem vorhergesagten Betriebsmittelstatus um einen vorbestimmten Betrag abweicht.

12. Verfahren nach einem der Ansprüche 8 bis 11, **dadurch gekennzeichnet, dass** das Verfahren ferner den Schritt eines Bestimmens umfasst, ob in Anbetracht des Betriebsmittelstatus eine Route berechnet werden kann, welche die Antriebsmechanismusbeschränkungen oder Antriebsmechanismuspräferenzen erfüllt.

13. Verfahren nach einem der Ansprüche 8 bis 12, wobei der Betriebsmittelstatus für den Antriebsmechanismus, für welchen keine Antriebsmechanismusbeschränkungen oder Präferenzen für die bestimmte Route bestehen, bestimmt wird.

14. Verfahren nach einem der Ansprüche 8 bis 13, wobei der Betriebsmittelstatus zumindest für einen Antriebsmechanismus, welcher keine fossilen Treibstoffe verbrennt, bestimmt wird.

15. System zum Steuern eines Hybridfahrzeugs, wobei das Hybridfahrzeug mindestens zwei unterschiedliche Mechanismen (110, 111) zum Antreiben des Fahrzeugs aufweist, wobei das System umfasst:
- eine Positionsbestimmungseinheit (140), welche die derzeitige Position des Fahrzeugs bestimmt,
- eine Einheit (180) zum Bestimmen bestehender Antriebsmechanismusbeschränkungen oder Antriebsmechanismuspräferenzen für geographische Regionen,
- eine Antriebsmechanismusbestimmungseinheit (190) zum Bestimmen des derzeitigen Antriebsmechanismusstatus des Fahrzeugs, und
- eine Steuereinheit (120), welche überprüft, ob Antriebsmechanismuspräferenzen oder Beschränkungen für die derzeitige Fahrzeugposition bestehen und welche, falls dies zutrifft, überprüft, ob der derzeitige Antriebsmechanismusstatus in Übereinstimmung mit den bestimmten Präferenzen oder Beschränkungen ist, **dadurch gekennzeichnet, dass** das System ausgestaltet ist, das Verfahren nach einem der Ansprüche 1 bis 14 auszuführen.

16. System nach Anspruch 15, **dadurch gekennzeichnet, dass** das System ferner eine Routenbestimmungseinheit (150) umfasst, welche eine Route zu einem vorbestimmten Ziel bestimmt.

17. System nach Anspruch 16, **dadurch gekennzeichnet, dass** das System ferner eine Antriebsmechanismusvorhersageeinheit umfasst, welche die Verwendung der unterschiedlichen Antriebsmechanismen für die bestimmte Route und die Schaltorte für ein Ändern der Antriebsmechanismen vorhersagt.

18. System nach Anspruch 17, wobei die Steuereinheit (120) die Antriebsmechanismusvorhersageeinheit in einer derartigen Art und Weise ansteuert, dass der Antriebsmechanismusstatus die Antriebsmechanismusbeschränkungen oder Präferenzen der Route erfüllen wird.

19. System nach einem der Ansprüche 15 bis 18, **dadurch gekennzeichnet, dass** das System ferner eine Datenbasis (160) umfasst, in welcher die Antriebsmechanismusbeschränkungen oder Präferenzen gespeichert sind.

20. System nach einem der Ansprüche 15 bis 19, **dadurch gekennzeichnet, dass** das System ferner eine Betriebsmittelbestimmungseinheit (130) zum Bestimmen des Betriebsmittelstatus von mindestens einem der mindestens zwei unterschiedlichen Antriebsmechanismen (110, 111) umfasst.

21. System nach Anspruch 20, **dadurch gekennzeichnet, dass** die Steuereinheit (120) die Antriebsmechanismusvorhersageeinheit in einer derartigen Art und Weise ansteuert, dass der Antriebsmechanismusstatus die Antriebsmechanismusbeschränkungen oder Präferenzen der Route unter Berücksichtigung des bestimmten Betriebsmittelstatus erfüllen wird.

22. System nach einem der Ansprüche 15 bis 21, **dadurch gekennzeichnet, dass** das Hybridfahrzeug mindestens einen der folgenden Antriebsmechanismen aufweist: einen Treibstoffverbrennungsmotor, einen elektrischen Motor und einen Wasserstoff angetriebenen Motor.

## Revendications

1. Procédé de commande d'un véhicule hybride, le véhicule hybride comportant au moins deux systèmes (110, 111) de propulsion du véhicule, le procédé comprenant les étapes suivantes de:
- déterminer la position actuelle (220; 425) du véhicule,
- déterminer les contraintes ou préférences de système de propulsion (230) pour certaines régions géographiques,
- vérifier s'il existe des préférences ou contraintes de système de propulsion pour la position actuelle du véhicule, et dans l'affirmative,
- déterminer l'état actuel du système de propulsion (250; 445) du véhicule, et
- vérifier (260) si l'état actuel du système de propulsion est conforme aux contraintes ou préférences déterminées,
**caractérisé en ce que** le procédé comprend en outre l'étape de calculer un itinéraire sortant de la région géographique ayant une contrainte du système de propulsion, l'itinéraire étant calculé en tenant compte du lieu de destination et/ou de l'état de ressource actuel du système de propulsion pour lequel il n'existe pas de contrainte.

2. Procédé selon la revendication 1, dans lequel le conducteur du véhicule est informé (270) lorsque l'état actuel de système de propulsion n'est pas en accord avec les contraintes ou préférences.

3. Procédé selon la revendication 1 ou 2, **caractérisé en ce qu'**il comprend en outre l'étape de commander (280; 440, 455) le système de propulsion du véhicule de telle sorte que l'état du système de propulsion du véhicule répond aux préférences ou contraintes.

4. Procédé selon l'une quelconque des revendications précédentes, comprenant en outre les étapes de déterminer un itinéraire vers un lieu de destination (415) prédéterminé et de vérifier (435) si l'itinéraire déterminé passe par une région géographique dans laquelle s'appliquent des contraintes ou préférences de système de propulsions.

5. Procédé selon l'une quelconque des revendications précédentes, dans lequel, pour déterminer des contraintes ou préférences (230) de système de propulsion, on accède à une base de données (160) dans laquelle des contraintes ou préférences de système de propulsion sont stockées conjointement avec la région géographique pour laquelle la contrainte ou les préférences sont valables.

6. Procédé selon l'une quelconque des revendications précédentes, dans lequel les contraintes ou préférences de système de propulsion sont reçues par l'intermédiaire d'une unité de réception (170) recevant les contraintes ou préférences par l'intermédiaire d'un système de transmission sans fil.

7. Procédé selon l'une quelconque des revendications 4 à 6,
**caractérisé en ce que** les systèmes de propulsion pour les différents tronçons de l'itinéraire sont déterminés de telle sorte que les contraintes ou préférences de système de propulsion sont satisfaites.

8. Procédé selon l'une quelconque des revendications 4 à 7,
**caractérisé en ce qu'**il comprend en outre les étapes de
- déterminer l'état de ressource d'au moins un système de propulsion, et
- déterminer l'utilisation des différents systèmes de propulsion et les lieux de commutation des systèmes de propulsion selon l'état de ressource de telle sorte que les contraintes ou préférences de système de propulsion sont satisfaites.

9. Procédé selon la revendication 8, **caractérisé en ce qu'**il comprend en outre l'étape de déterminer un niveau minimum de ressource pour au moins un des différents systèmes de propulsion, l'utilisation des différents systèmes de propulsion et les lieux de commutation pour l'itinéraire déterminé étant déterminés de telle sorte que le niveau de ressource pour ledit au moins un système de propulsion ne tombe pas en dessous du niveau minimum de ressource.

10. Procédé selon l'une quelconque des revendications précédentes, **caractérisé en ce qu'**il comprend en outre l'étape de prédire l'état de ressource pour les différents tronçons de l'itinéraire, dans lequel on vérifie en cours de route si, en fonction de la position, l'état de ressource diffère par un montant prédéterminé de l'état de ressource prédit.

11. Procédé selon la revendication 10, **caractérisé en ce que** l'utilisation des différents systèmes de propulsion et les lieux de commutation sont recalculés pour le restant de l'itinéraire si l'état de ressource diffère par un montant déterminé de l'état de ressource prédit.

12. Procédé selon l'une quelconque des revendications 8 à 11,
**caractérisé en ce qu'**il comprend en outre l'étape de déterminer si, en vue de l'état de ressource, un itinéraire peut être calculé, qui répond aux contraintes ou préférences du système de propulsion.

13. Procédé selon l'une quelconque des revendications 8 à 12, dans lequel l'état de ressource est déterminé pour le système de propulsion pour lequel il n'existe pas de contraintes ou préférences de système de propulsion pour l'itinéraire déterminé.

14. Procédé selon l'une quelconque des revendications 8 à 13, dans lequel l'état de ressource est déterminé au moins pour un système de propulsion qui ne brûle pas des combustibles fossiles.

15. Système pour commander un véhicule hybride, le véhicule hybride comportant au moins deux systèmes différents (110, 111) pour propulser le véhicule, le système comprenant:
- une unité de détermination de position (140) déterminant la position actuelle du véhicule,
- une unité (180) pour déterminer des contraintes ou préférences de système de propulsion existant pour des régions géographiques,
- une unité de détermination de système de propulsion (190) déterminant l'état actuel de système de propulsion du véhicule, et
- une unité de commande (120) vérifiant s'il existe des préférences ou contraintes de système de propulsion pour la position actuelle du véhicule, et, dans l'affirmative, vérifiant si l'état actuel de système de propulsion est en accord avec les préférences ou contraintes déterminées,
**caractérisé en ce que** le système est adapté pour exécuter le procédé selon l'une quelconque des revendications 1-14.

16. Système selon la revendication 15, **caractérisé en ce qu'**il comprend en outre une unité de détermination d'itinéraire (150) déterminant un itinéraire vers une destination prédéterminée.

17. Système selon la revendication 16, **caractérisé en ce qu'**il comprend en outre une unité de prédiction de système de propulsion prédisant l'utilisation des différents système de propulsion pour l'itinéraire déterminé et les lieux de commutation pour changer les systèmes de propulsion.

18. Système selon la revendication 17, dans lequel l'unité de commande (120) commande l'unité de prédiction de système de propulsion de telle sorte que l'état de système de propulsion répond aux contraintes ou préférences de système de propulsion de l'itinéraire.

19. Système selon l'une quelconque des revendications 15 à 18, **caractérisé en ce qu'**il comprend en outre une base de données (160) dans laquelle sont stockées les contraintes ou préférences de systèmes de propulsion.

20. Système selon l'une quelconque des revendications 15 à 19, **caractérisé en ce qu'**il comprend en outre une unité de détermination de ressource (130) pour déterminer l'état de ressource d'au moins un desdits au moins deux systèmes de propulsion différents (110, 111).

21. Système selon la revendication 20, **caractérisé en ce que** l'unité de commande (120) commande l'unité de prédiction de système de propulsion de telle sorte que l'état de système de propulsion répond aux contraintes ou préférences de système de propulsion de l'itinéraire en tenant compte de l'état de ressource déterminé.

22. Système selon l'une.quelconque des revendications 15 à 21, **caractérisé en ce que** le véhicule hybride comporte au moins un des systèmes de propulsion suivants: un moteur à combustion interne, un moteur électrique et un moteur fonctionnant à l'hydrogène.
